# EUROPEAN PATENT APPLICATION

(11) **EP 0 578 868 A1**
(43) Date of publication of application: **19.01.1994**
(21) Application number: 92202143.1
(22) Date of filing: 13.07.1992
(51) Int. Cl.: F03B 17/00, F03D 9/02

(54) **Apparatus for accumulating energy and converting energy in electrical power**

(71) Applicant: Doleh, Zakaria Kalil, Dubai (AE)
(72) Inventor: Doleh, Zakaria Kalil, Dubai (AE)
(74) Representative: Hoijtink, Reinoud

(57) **Abstract**

The invention relates to an apparatus for accumulating natural energy, such as wind energy, or energy produced by waves in the sea or in lakes and further comprises means for converting the accumulated energy into electrical power. Large containers are filled with water and thereafter powered by natural energy sources transported to a higher level. Thereafter the liquid in the container is conducted to a lower place in order to be used for generating electrical power.

## Description

A problem that arises in using natural energy, such as wind energy, is that the availability of the natural energy is not constant. Wind force varies very strongly over a rather short time period. It is therefore necessary to have means for accumulating the wind energy such that a constant availability of energy is guaranteed. The energy accumulating means should be as cheap as possible in order to make the use of wind energy economically feasible.

It is therefore an object of the invention to provide cheap means for accumulating energy out of natural sources and to generate electrical power from the accumulated energy.

This object is achieved with an apparatus for accumulating energy and converting energy in electrical power comprising an open frame to be installed at the bottom of the sea or lake, at least one closable container, transport means driven by wind power to move the container between a position towards the bottom of the sea or lake and a position close to the water level and means connected to the outlet of said container for generating electrical power.

By transporting the container filled with water from a position at the bottom of the sea or lake to a higher level if wind energy is available energy can be accumulated and stored and converted later on into electrical power.

According to the invention the apparatus according to the invention comprises further means for supporting said container in the position at the surface of the water. These supporting means can consist of gas-filled supporting containers floating on the water. By supporting the liquid-filled container by gas, for example air, -filled containers, it is avoided that the transporting means are continuously loaded. According to the embodiment of the invention the transport means consist of hinged arms.

The position of the supporting gas-filled containers when the liquid-filled containers are at the bottom of the sea or lake, differs from the position when supporting the liquid-filled container. A very advantageous embodiment is obtained if the transport means also move the supporting containers between a supporting position and a position differing from said supporting position, whilst the liquid-filled container is at the bottom of the sea.

The movement of the supporting containers is such that they are moved to the supporting position together with the movement of said closable liquid-filled container to said position at the water surface.

Advantageously the transport means are moved by means of a cable winded around said containers and connected to a shaft driven by wind energy. The cable is winded around said containers by means of an annular roller around said containers.

Preferably a system is provided comprising apparatuses connected in series as described above.

By this it is guaranteed that there is always enough energy stored for providing a constant source of electrical power. If the liquid-filled container in one of the apparatuses connected in series is at the bottom of the sea other apparatuses in the series connection will be at the water surface and providing electrical energy.

The invention will be elucidated with the help of the drawings in which:
Figure 1 is an isometric view of an embodiment of the invention,
Figure 2 is a simplified end view of the apparatus according to the invention,
Figure 3 is a simplified view as in figure 2 in which the position of the containers is different from the position in figure 2, and
Figure 4 is an isometric view of a series connection of apparatuses according to the invention.

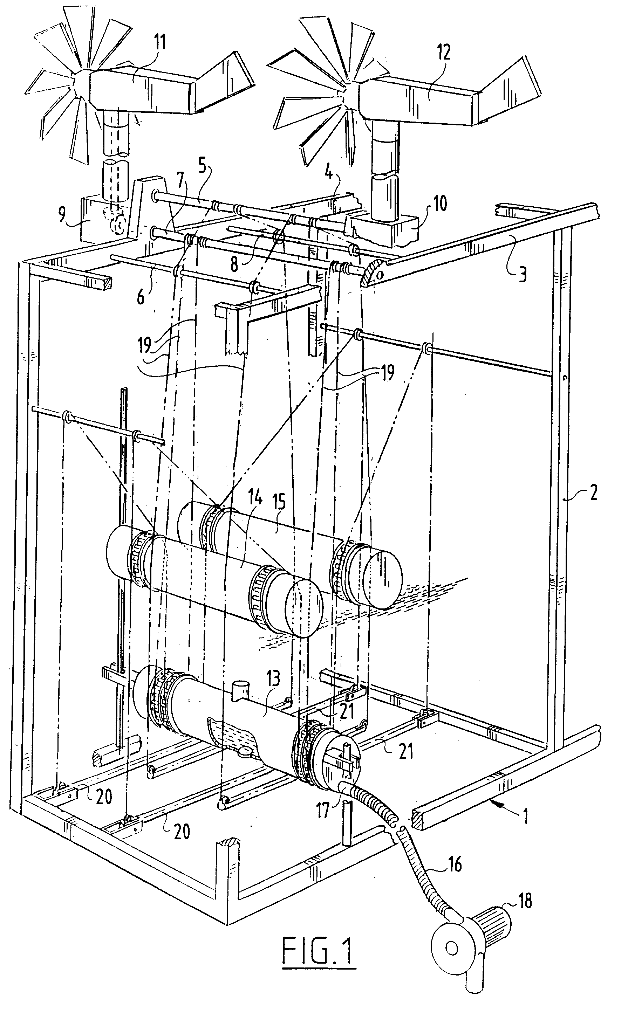

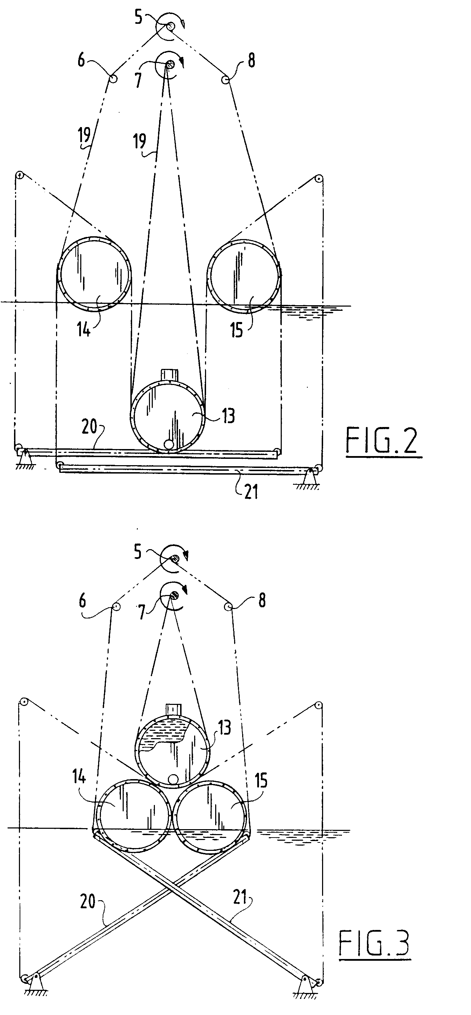

The embodiment of the invention comprises a rectangular frame 1 consisting of vertical bars 2 and horizontal trusses 3, 4. In the horizontal trusses 3, 4 rotatable shafts 5, 6, 7 and 8 are supported. By means of a gearbox 9, 10 respectively the shaft 7, 5 respectively is connected to a rotating turbine 11, 12 respectively. The turbine is driven by wind energy. Inside of the open frame cylindrical containers 13, 14 and 15 are supported. Container 13 is below the water level in figure 1 and figure 2 and filled with water, whereas containers 14 and 15 are gas-filled and floating at the water surface. By a flexible hose 16 the closable outlet opening 17 of container 13 is connected to a turbine 18 for generating electrical power. By means of cables 19 the driving axes 7, 5 are connected to the container 13, 14, 15 as well as by hinged arms 20, 21. By rotating of the turbine the cable will be moved and the hinged arms will move upwardly pushing container 13 in vertically upward direction. At the same time the containers 14, 15 move inwardly from the position according to figure 2 to the position of figure 3. By this the containers 13, 14 and 15 move from a position according to figure 2 in which the liquid-filled container 13 is at the bottom of the sea to the position of figure 3 in which the liquid-filled container 13 is at a position above water level and supported by the floating gas-filled containers 14, 15. In this position the outlet of container 13 may be opened so that the water flows downwardly through the hose 16 towards the electrical generator 18.

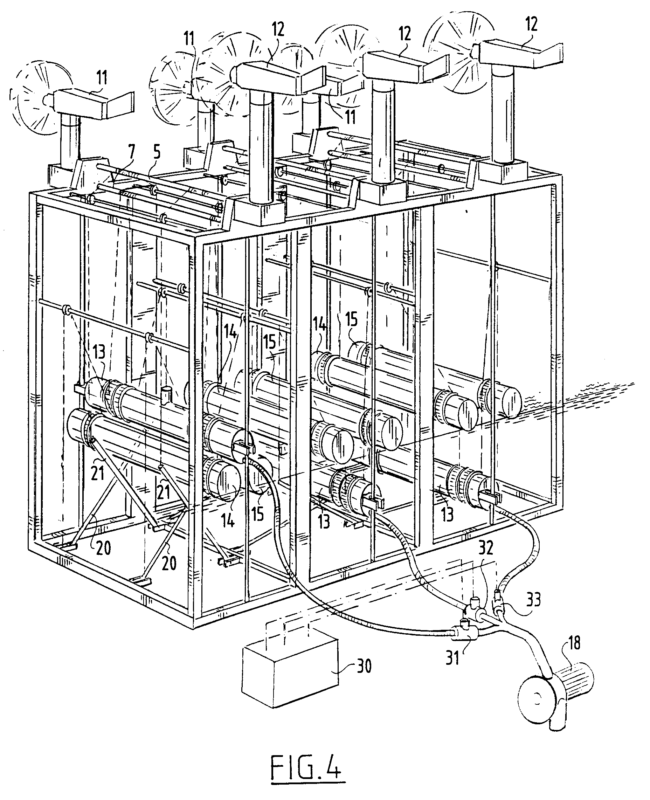

According to figure 4 apparatuses according to the invention according to figures 1-3 are connected in series such that at any time the liquid-filled cylinders are above water level and provides for electrical energy. In this series connection control box 30 provides for the control of the valves 31, 32, 33 such that only those valves are opened from which the connecting hose is connected to a container at a position above water level.

It is remarked that, rather than driving the transport means by wind energy, it is possible to use energy from waves or other sources of natural energy to this end.

## Claims

1. Apparatus for accumulating energy and converting energy in electrical power comprising an open frame to be installed at the bottom of the sea or lake, at least one closable container, transport means driven by wind power to move the container between a position towards the bottom of the sea or lake and a position close to the water level and means connected to the outlet of said container for generating electrical power.

2. Apparatus according to claim 1, characterized by means for supporting said container in the position at the surface of the water.

3. Apparatus according to claim 2, characterized in that the supporting means consist of gas-filled supporting containers floating on the water.

4. Apparatus according to claim 1-3, characterized in that the transport means consist of hinged arms.

5. Apparatus according to claim 1-4, characterized in that the transport means also move the supporting containers between a supporting position and a position differing from said supporting position.

6. Apparatus according to claim 5, characterized in that the supporting containers are moved to the supporting position together with the movement of said closable container to said position at the water surface.

7. Apparatus according to claim 1-6, characterized in that the transport means are moved by means of a cable winded around said containers and connected to a shaft driven by wind energy.

8. Apparatus according to claim 7, characterized in that said cable is winded around said containers by means of an annular roller around said containers.

9. System comprising apparatuses connected in series as claimed in any of the claims 1-8.
